# EUROPEAN PATENT APPLICATION

(11) **EP 4 834 745 A1**
(43) Date of publication of application: **04.11.2026**
(21) Application number: 24913188.9
(22) Date of filing: 03.04.2024
(51) Int. Cl.: B63B 11/04, B63B 25/16, B63J 3/04, B63H 21/16, B63H 21/17, B63B 15/00, B63J 2/12, B63B 11/02, F02C 7/22, F02B 43/10

(54) **ARRANGEMENT STRUCTURE OF FUEL TANK FOR CABIN OF SHIP AND ELECTRIC PROPULSION, AND SHIP COMPRISING SAME**

(30) Priority: 28.12.2023 KR 20230194502
(71) Applicant: Hanwha Ocean Co., Ltd., Geoje-si, Gyeongsangnam-do 53302 (KR)
(72) Inventor: GANG, Geum Jun, Seoul 08017 (KR); HWANG, Jong Kyu, Seongnam-si, Gyeonggi-do 13503 (KR); YOOK, Sun Min, Seoul 02714 (KR); JEON, Eui Joon, Seoul 03112 (KR); LEE, U Shin, Seoul 04004 (KR); SHIM, Jae Hwi, Seongnam-si, Gyeonggi-do 13568 (KR)
(74) Representative: dompatent
(86) International application number: PCT/KR2024/004283
(87) International publication number: WO 2025/143372

(57) **Abstract**

Proposed is an arrangement structure of a fuel tank for a cabin of a ship and electric propulsion. The arrangement structure includes an electric propulsion system (110) disposed in an engine room (111) and configured to provide electric power produced by a gas turbine (112) as propulsion force to an electric propulsion motor, a first liquefied gas storage tank (120) disposed in a cargo section (A) and configured to supply a first gas fuel to the gas turbine (112), and a second liquefied gas storage tank (130) disposed in a bow section (B) and configured to supply a second gas fuel to the gas turbine (112). Accordingly, by disposing the second liquefied gas storage tank (130) in the bow section (B), safety is secured and an additional space in the engine room (111) is secured.

## Description

### Technical Field

The present disclosure relates to an arrangement structure of a fuel tank for a cabin of a ship and electric propulsion, and relates to a ship including the arrangement structure. Particularly, the present disclosure relates to an arrangement structure of a fuel tank for a cabin of a ship and electric propulsion, and relates to a ship including the arrangement structure configured such that a fuel storage tank storing a gas fuel supplied to a gas turbine of an engine room is disposed in a bow section. More particularly, the present disclosure relates to an arrangement structure of a fuel tank for a cabin of a ship and electric propulsion, and relates to a ship including the arrangement structure configured such that a fuel storage tank storing a gas fuel supplied to a gas turbine of an engine room is disposed in a bow section so that the fuel storage tank is separated from a crew accommodation disposed in a stern section so as to secure safety and to secure an additional space in the engine room.

### Background Art

Recently, in order to comply with strengthened greenhouse gas (GHG) and carbon dioxide reduction regulations of the International Maritime Organization (IMO), namely IMO 2050, ammonia (NH₃) that does not generate carbon dioxide has begun to attract attention.

Particularly, development of an electric propulsion ship which generates electric power from a gas turbine using ammonia as a fuel and which uses the generated electric power is required.

Meanwhile, when an ammonia gas turbine is applied to an electric propulsion ship, compared with an engine using conventional fuels such as diesel (HFO, MGO, MDO, or LSMGO) or LNG, an occupied volume within the ship is reduced, thereby maintaining operational efficiency and stability of the ship. Furthermore, in shipbuilding, in order to comply with IMO SOLAS regulations, rearrangement of a fuel tank, a fuel supply system, a cabin including a crew accommodation, and so on may be applied in consideration of the regulations.

Accordingly, there is a need for a technology capable of replacing a dual fuel engine, which is a propulsion engine, with an electric propulsion engine applied to an engine room of an LNG carrier, thereby increasing space utilization of the engine room.

### Disclosure

### Technical Problem

Accordingly, the present disclosure has been made keeping in mind the above problems occurring in the related art, and an objective of the present disclosure is to provide an arrangement structure of a fuel tank for a cabin of a ship and electric propulsion, and a ship including the arrangement structure configured such that a fuel storage tank storing a gas fuel supplied to a gas turbine of an engine room is disposed in a bow section so that the fuel storage tank is separated from a crew accommodation disposed in a stern section so as to secure safety and to secure an additional space in the engine room.

### Technical Solution

In order to achieve the objectives described above, according to an aspect of the present disclosure, there is provided an arrangement structure of a fuel tank for a cabin of a ship and electric propulsion, the arrangement structure including: an electric propulsion system disposed in an engine room and configured to provide electric power produced by a gas turbine as propulsion force to an electric propulsion motor; a first liquefied gas storage tank disposed in a cargo section and configured to supply a first gas fuel to the gas turbine; and a second liquefied gas storage tank disposed in a bow section and configured to supply a second gas fuel to the gas turbine.

Here, the second liquefied gas storage tank may be disposed in the bow section in front of No. 1 cargo tank in the cargo section.

Here, the second liquefied gas storage tank may be isolated by a first cofferdam that is disposed in a vertical direction in the bow section.

In addition, the second liquefied gas storage tank may be configured to store liquefied ammonia, and the gas turbine may be configured to produce electric power by using the liquefied ammonia.

In addition, the second liquefied gas storage tank may be configured to store LNG.

In addition, the first liquefied gas storage tank may be a cargo tank configured to store LNG, and the gas turbine may be driven by boil off gas generated from the cargo tank during navigation or natural gas acquired by forced vaporization and by ammonia gas from the second liquefied gas storage tank.

In addition, a Dual Fuel Generator Engine (DFGE) may be additionally disposed in the engine room.

Here, the DFGE may be a dual fuel generator engine configured to use fuel oil and natural gas that is supplied from the first liquefied gas storage tank.

In addition, the arrangement structure may further include: a fuel preparation room in which an ammonia supply system that supplies ammonia gas from the second liquefied gas storage tank to the gas turbine is mounted; and a cargo compressor room in which an LNG supply system that supplies boil off gas generated from the cargo tank or natural gas acquired by forced vaporization to the gas turbine is mounted.

Here, the fuel preparation room may be mounted on the second liquefied gas storage tank, and the cargo compressor room may be mounted on a trunk deck in the cargo section.

In addition, both the fuel preparation room and the cargo compressor room may be mounted on the first liquefied gas storage tank.

Here, the fuel preparation room and the cargo compressor room may be disposed separately on a portside and a starboard, respectively, or may be disposed to be biased toward one of the portside and the starboard.

In addition, a dual fuel auxiliary boiler configured to produce steam required in the ship may be additionally disposed in a stern section.

Here, in the engine room, the dual fuel auxiliary boiler may be disposed on a 1st deck, the gas turbine may be disposed on a 2nd deck, and the DFGE may be disposed on a 3rd deck.

In addition, in the engine room, the dual fuel auxiliary boiler may be disposed on a starboard side, the gas turbine may be disposed on a portside, and the DFGE may be disposed on the starboard side.

In addition, in the engine room, the dual fuel auxiliary boiler may be disposed on a portside, the gas turbine may be disposed on a starboard side, and the DFGE may be disposed on the portside.

In addition, boil off gas (BOG) generated from the first liquefied gas storage tank may be combusted through an idle mode of the gas turbine, a Gas Combustion Unit (GCU) mode of the dual fuel auxiliary boiler, or the DFGE.

In addition, an electrical switchboard room may be vertically disposed between the engine room and the first liquefied gas storage tank.

Here, cofferdam may be mounted between the electrical switchboard room and the first liquefied gas storage tank.

In addition, the second liquefied gas storage tank may be designed in a trapezoidal shape according to a hull form.

In addition, the arrangement structure may further include a waste heat recovery system separately disposed adjacent to an engine casing covering the engine room and configured to convert waste heat of exhaust gas discharged from the gas turbine into electric power and to supply the electric power to the electric propulsion motor.

Here, the waste heat recovery system may be a supercritical carbon dioxide power generation system.

Here, the supercritical carbon dioxide power generation system may be disposed adjacent to a stern side of the engine casing, and may be spaced apart from a sunken deck by pilotis at a predetermined height.

In addition, the supercritical carbon dioxide power generation system may include: a heater disposed inside the engine casing and configured to recover waste heat of exhaust gas discharged from the gas turbine to heat carbon dioxide; a turbine configured to be rotated due to a supercritical state of the carbon dioxide heated by the heater, thereby generating electric power; a compressor configured to compress the carbon dioxide; a heat exchanger configured to exchange heat of carbon dioxide recovered from the turbine with heat of carbon dioxide supplied from the compressor to the heater; a precooler configured to cool the carbon dioxide passing through the heat exchanger from the turbine and to supply the cooled carbon dioxide to the compressor; and a preheater configured to heat carbon dioxide supplied from the compressor to the heater by heat exchange with exhaust gas that has passed through the heater, the carbon dioxide bypassing the heat exchanger.

Meanwhile, according to another aspect of the present disclosure, there is provided a ship including the arrangement structure described above.

### Advantageous Effects

According to the present disclosure, by disposing the fuel storage tank storing the gas fuel supplied to the gas turbine in the engine room in the bow section so that the fuel storage tank is separated from the crew accommodation disposed in the stern section, an effect of securing safety and securing an additional space in the engine room may be realized.

### Description of Drawings

FIG. 1 is a view illustrating an arrangement structure of fuel tank for a cabin of a ship and electric propulsion according to an embodiment of the present disclosure.
FIG. 2 is a view illustrating a plan view of FIG. 1.
FIG. 3 is a view enlarging and illustrating a bow section in FIG. 1.
FIG. 4 is a view enlarging and illustrating a stern section in FIG. 1.
FIG. 5 shows examples of a first liquefied gas storage tank and a second liquefied gas storage tank in FIG. 2.
FIG. 6 is a view illustrating an example of a configuration of a gas turbine in FIG. 2.
FIG. 7 is a view illustrating an example of a configuration of a waste heat recovery system in FIG. 2.

### Mode for Invention

Hereinafter, embodiments of the present disclosure having the above-described features will be described in more detail with reference to the accompanying drawings.

An arrangement structure of a fuel tank for a cabin of a ship and electric propulsion according to an embodiment of the present disclosure includes: an electric propulsion system 110 disposed in an engine room 111 and configured to provide electric power produced by a gas turbine 112 as propulsion force to an electric propulsion motor; a first liquefied gas storage tank 120 disposed in a cargo section A and configured to supply a first gas fuel to the gas turbine 112; and a second liquefied gas storage tank 130 disposed in a bow section B and configured to supply a second gas fuel to the gas turbine 112, wherein the arrangement structure is characterized in that safety is secured and an additional space in the engine room is secured through the arrangement of the second liquefied gas storage tank 130 in the bow section B.

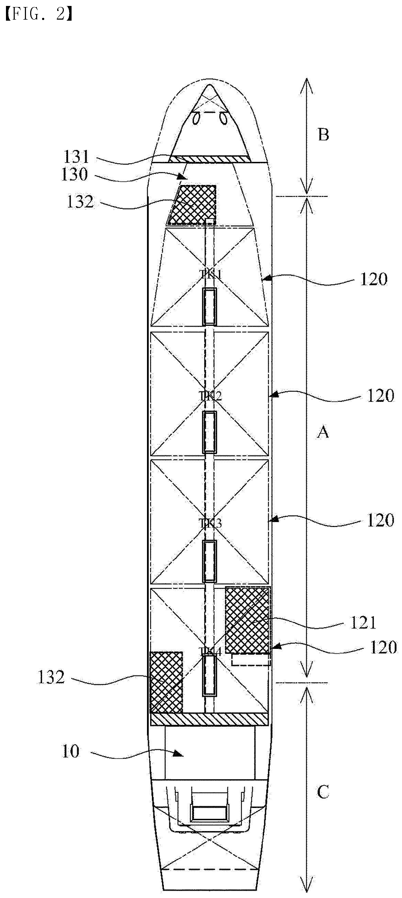

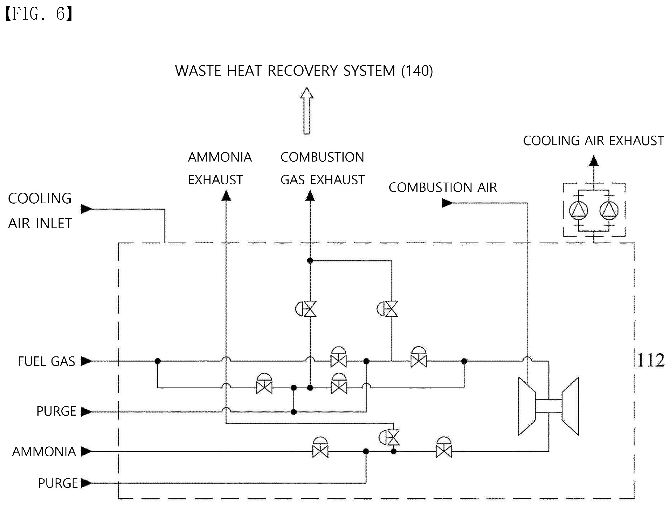

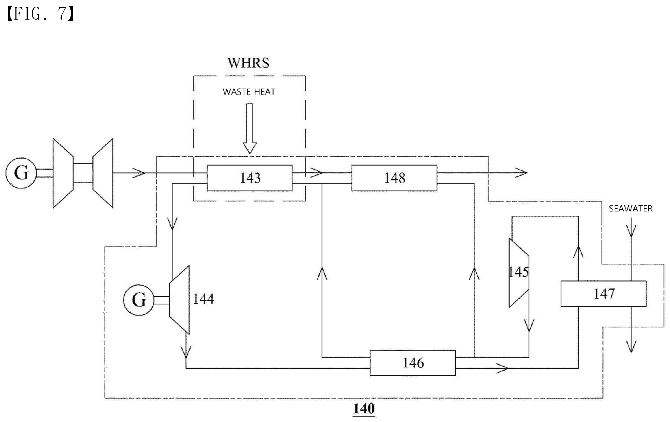

Hereinafter, the arrangement structure of the fuel tank for the cabin of the ship and the electric propulsion having the configuration described above will be described in detail with reference to FIG. 2 to FIG. 7.

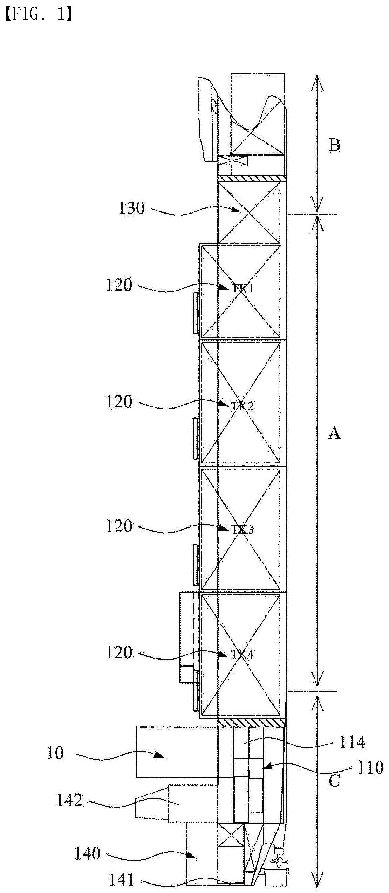

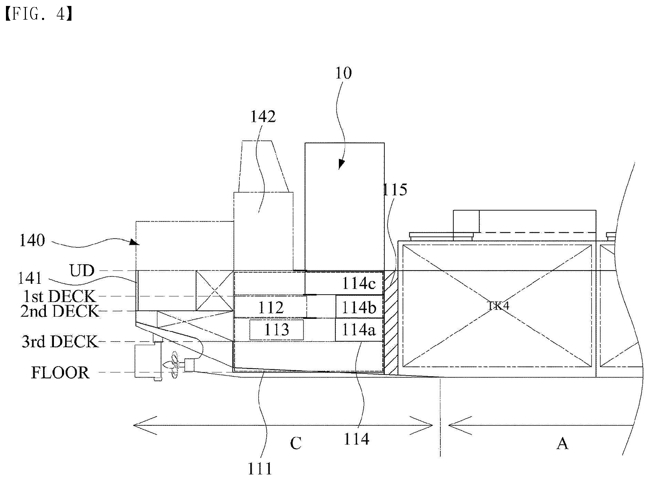

First, referring to FIG. 1 and FIG. 4, the electric propulsion system 110 is disposed in the engine room 111 in a stern section C and is configured to provide electric power produced by the gas turbine 112 as propulsion force to the electric propulsion motor.

Here, the gas turbine 112 may be a dual fuel gas turbine. In a case of an LNG carrier, electric power may be produced by using boil off gas (BOG) generated from cargo tanks (TK1 to TK4, i.e., the first liquefied gas storage tank 120) in a cargo section or natural gas acquired by forced vaporization of LNG, together with ammonia gas vaporized from liquefied ammonia stored in the second liquefied gas storage tank 130.

In addition, as an additional electric power generation means, a Dual Fuel Generator Engine (DFGE) 113 that uses fuel oil such as diesel and natural gas supplied from the first liquefied gas storage tank 120 is additionally disposed in the engine room 111, so that electric power insufficient from operation of the gas turbine 112 alone may be supplemented through the DFGE 113 or a situation in which the gas turbine 112 cannot be operated may be managed.

In addition, a dual fuel auxiliary boiler (not shown) that uses fuel oil such as diesel and LNG may be additionally disposed in the stern section C so as to produce and supply steam required in the ship.

Meanwhile, the dual fuel auxiliary boiler may be disposed on a first deck. As illustrated in FIG. 4, the gas turbine 112 may be disposed on a second deck, and the DFGE 113 may be disposed on a third deck.

Here, in the engine room 111, the dual fuel auxiliary boiler may be disposed on a starboard side, the gas turbine 112 may be disposed on a portside, and the DFGE 113 may be disposed on the starboard side. Otherwise, the dual fuel auxiliary boiler may be disposed on the portside, the gas turbine 112 may be disposed on the starboard side, and the DFGE 113 may be disposed on the portside. Accordingly, a space for combustion air intake of the gas turbine 112 is secured, and space utilization of the engine room 111 may be maximized through such an optimal arrangement configuration.

For reference, the first deck, the second deck, and the third deck illustrated in FIG. 4 are terms generally used in the shipbuilding and marine industry field, and may be understood as decks sequentially arranged in a floor direction with respect to an upper deck (UD), which are referred to as the first deck, the second deck, and the third deck.

In addition, through an idle mode of the gas turbine 112, a Gas Combustion Unit (GCU) mode of the dual fuel auxiliary boiler, or the DFGE 113, boil off gas (BOG) generated from the first liquefied gas storage tank 120 may be combusted, so that a separate Gas Combustion Unit (GCU) may not be selectively mounted, thereby additionally securing an additional space.

Further, referring to FIG. 1 and FIG. 4, an electrical switchboard room 114 may be vertically disposed between the engine room 111 and the first liquefied gas storage tank 120 (TK4).

In addition, a cofferdam 115 may be mounted between the electrical switchboard room 114 and the first liquefied gas storage tank 120 so as to partition the electrical switchboard room 114 and the first liquefied gas storage tank 120 from each other, thereby securing safety.

For example, in the electrical switchboard room 114, a frequency converter room 114a configured to convert a frequency of a voltage for controlling driving of the electric propulsion motor of the electric propulsion system 110, a switchboard room 114b configured to convert high voltage supplied from the gas turbine 112 into low voltage, and an engine control room 114c configured to control the DFGE 113 are sequentially stacked and vertically disposed, so that various electrical rooms that are conventionally distributed are integrated into a single section to more efficiently utilize space and to efficiently configure a power cable.

Next, the first liquefied gas storage tank 120 is disposed in the cargo section A, is a cargo tank (TK1 to TK4) which is a membrane tank storing LNG, and is configured to supply a first gas fuel to the gas turbine 112.

That is, as described above, through a cargo compressor room 121 to be described later, boil off gas generated from the cargo tank (TK1 to TK4) during operation of the ship or natural gas acquired by forced vaporization of LNG may be supplied to the gas turbine 112.

Next, the second liquefied gas storage tank 130 is disposed in the bow section B, and is configured to supply a second gas fuel to the gas turbine 112.

Here, the second liquefied gas storage tank 130 is disposed in the bow section B in front of No.1 cargo tank TK1, so that a vent mast of the second liquefied gas storage tank 130 is separated from a crew accommodation 10 and the engine room 111 in the stern section C, thereby securing safety.

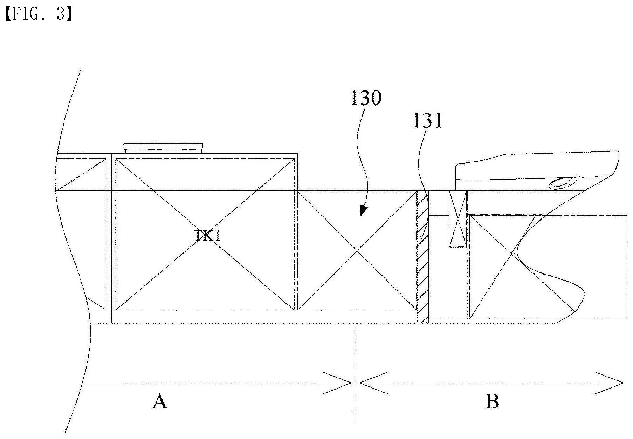

In addition, as illustrated in FIG. 3, the second liquefied gas storage tank 130 is isolated by a cofferdam 131 disposed in a vertical direction in the bow section B, thereby securing safety of the bow section B.

In addition, the second liquefied gas storage tank 130 may be an IMO type A tank, may store liquefied ammonia, and may use vaporized ammonia gas as a fuel gas of the gas turbine 112.

Meanwhile, the second liquefied gas storage tank 130 may store LNG instead of liquefied ammonia, so that, together with the first liquefied gas storage tank 120, both of the first liquefied gas storage tank 120 and the second liquefied gas storage tank 130 may store LNG and thus may be utilized as an LNG carrier having an increased cargo tank storage capacity. In this case, the second liquefied gas storage tank 130 may be an IMO type B tank or a membrane type tank.

In addition, referring to FIG. 2, the arrangement structure may further include a fuel preparation room 132 in which an ammonia supply system for supplying ammonia gas from the second liquefied gas storage tank 130 to the gas turbine 112 is mounted, and may further include a cargo compressor room 121 in which an LNG supply system for supplying boil off gas generated from the cargo tank (TK1 to TK4) or natural gas acquired by forced vaporization of LNG to the gas turbine 112 is mounted.

Specifically, the fuel preparation room 132 is preferably mounted on an external deck on the second liquefied gas storage tank 130, and the cargo compressor room 121 is preferably mounted on a trunk deck on the cargo section A. Otherwise, both the fuel preparation room 132 and the cargo compressor room 121 may be disposed on the second liquefied gas storage tank 130.

Alternatively, both the fuel preparation room 132 and the cargo compressor room 121 may be mounted on a trunk deck of the first liquefied gas storage tank 120 (TK4). For example, on the trunk deck, the fuel preparation room 132 and the cargo compressor room 121 may be disposed separately on a portside and a starboard, respectively, or may be disposed to be biased toward one of the portside and the starboard.

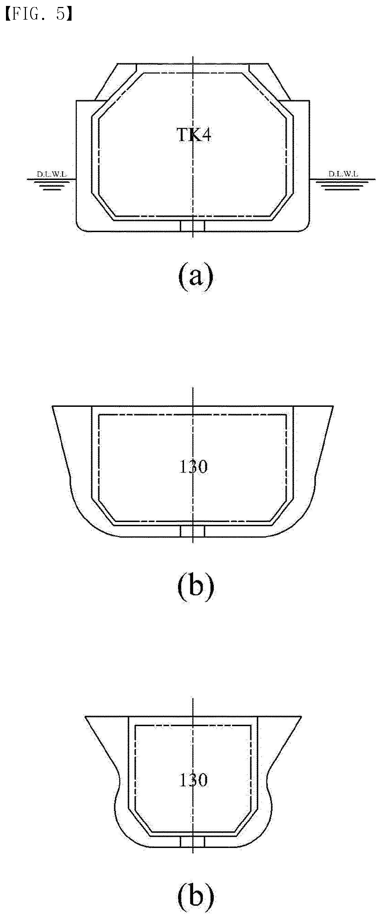

In addition, as illustrated in FIG. 5, the second liquefied gas storage tank 130 may be designed in a trapezoidal shape instead of a rectangular shape according to a hull form, so that the second liquefied gas storage tank 130 may be applied without change of the hull form.

In addition, referring to FIG. 5, as described above, by replacing a propulsion engine using conventional fuels such as diesel or LNG with the gas turbine 112 disposed in the engine room 111, the second liquefied gas storage tank 130 is mounted in front of No.1 cargo tank TK1 in a state in which LOA of the ship is maintained. Therefore, although an overall length of a hull is the same, a size of the engine room 111 may be reduced by applying the electric propulsion system 110 in the stern section C. Furthermore, as a space of the stern section C is reduced, a space of the bow section B is increased to allow arrangement of the second liquefied gas storage tank 130.

Meanwhile, referring to FIG. 4, FIG. 6, and FIG. 7, the arrangement structure may further include a waste heat recovery system 140 disposed separately adjacent to an engine casing 142 covering the engine room 111 and configured to convert waste heat of exhaust gas discharged from the gas turbine 112 into electric power and to supply the electric power to the electric propulsion motor.

That is, the waste heat recovery system 140 may be a supercritical carbon dioxide power generation system, and is disposed adjacent to a stern side of the engine casing 142 and is spaced apart from a sunken deck at a predetermined height by pilotis 141 to be mounted in a pilotis structure, thereby being mounted in a space independent of the engine room 111 so as to secure safety of the engine room 111.

Meanwhile, the waste heat recovery system 140 may be a supercritical carbon dioxide (sCO₂) power generation system configured to generate electric power by a Brayton cycle having two isobaric processes and two isentropic processes, and a working fluid maintains a supercritical state during compression, heating, expansion, and cooling through the Brayton cycle. Here, the waste heat recovery system 140 is not limited to the supercritical carbon dioxide power generation system, and electric power may also be generated through a turbine using steam generated by heat exchange with waste heat.

That is, as illustrated in FIG. 4, the supercritical carbon dioxide power generation system is disposed adjacent to the stern side of the engine casing 142 and is spaced apart from the sunken deck (2nd DECK) by the pilotis 141 at a predetermined height, so that mooring equipment and so on may be disposed without interference to increase space utilization, and the system may be mounted in a space independent of the engine room 111 to secure stability of the engine room 111.

Specifically, referring to FIG. 10 and FIG. 11, the supercritical carbon dioxide power generation system may include: a heater 143 disposed in the engine casing 142 and a funnel and configured to recover waste heat of exhaust gas discharged from the gas turbine 112 and to heat circulating carbon dioxide; a turbine 144 configured to generate electric power by being rotated due to a supercritical state of carbon dioxide heated by the heater 143; a compressor 145 configured to compress circulating carbon dioxide; a heat exchanger 146 (recuperator) configured to perform heat exchange between carbon dioxide recovered from the turbine 144 and carbon dioxide supplied from the compressor 145 to the heater 143; a precooler 147 configured to cool carbon dioxide passing through the heat exchanger 146 from the turbine 144 using seawater and to supply the cooled carbon dioxide to the compressor 145; and a preheater 148 configured to heat carbon dioxide supplied from the compressor 145 to the heater 143 by heat exchange with exhaust gas that has passed through the heater 143, the carbon dioxide bypassing the heat exchanger 146.

In addition, the waste heat recovery system 140 may be disposed on a side (starboard or portside) opposite to a side (portside or starboard) on which the gas turbine 112 is disposed so as to secure a space (stern side) for combustion air intake of the gas turbine 112. For example, when the gas turbine 112 is disposed on the portside, the waste heat recovery system 140 may be disposed on the starboard. Conversely, when the gas turbine 112 is disposed on the starboard, the waste heat recovery system 140 may be disposed on the portside.

In addition, although not illustrated, both front corners of the engine casing 142 of the stern section C may be formed in a chamfered shape, and both rear corners of the crew accommodation 10 may be formed in a chamfered shape, thereby forming an additional space for a movement path of a crew member to the engine room 111 through a hatch and for installation of additional equipment such as a provision crane and a lifeboat.

Meanwhile, another embodiment of the present disclosure provides a ship including the arrangement structure of the fuel tank for the cabin of the ship and electric propulsion described above.

Accordingly, according to the embodiment described above, by disposing the fuel storage tank storing the gas fuel supplied to the gas turbine in the engine room in the bow section so as to be separated from the crew accommodation disposed in the stern section, safety may be secured and an additional space in the engine room may be secured.

The description proposed herein is just an exemplary embodiment for the purpose of illustrations only, not intended to limit the scope of the present disclosure, so it should be understood that other equivalents and modifications could be made thereto without departing from the scope of the present disclosure at the time at which the present application is filed.

## Claims

1. An arrangement structure of a fuel tank for a cabin of a ship and electric propulsion, the arrangement structure comprising:
an electric propulsion system disposed in an engine room and configured to provide electric power produced by a gas turbine as propulsion force to an electric propulsion motor;
a first liquefied gas storage tank disposed in a cargo section and configured to supply a first gas fuel to the gas turbine; and
a second liquefied gas storage tank disposed in a bow section and configured to supply a second gas fuel to the gas turbine.

2. The arrangement structure of claim 1, wherein the second liquefied gas storage tank is disposed in the bow section in front of No. 1 cargo tank in the cargo section.

3. The arrangement structure of claim 2, wherein the second liquefied gas storage tank is isolated by a first cofferdam that is disposed in a vertical direction in the bow section.

4. The arrangement structure of claim 2, wherein the second liquefied gas storage tank is configured to store liquefied ammonia, and
wherein the gas turbine is configured to produce electric power by using the liquefied ammonia.

5. The arrangement structure of claim 1, wherein the second liquefied gas storage tank is configured to store LNG.

6. The arrangement structure of claim 1, wherein the first liquefied gas storage tank is a cargo tank configured to store LNG, and
wherein the gas turbine is driven by boil off gas generated from the cargo tank during navigation or natural gas acquired by forced vaporization and by ammonia gas from the second liquefied gas storage tank.

7. The arrangement structure of claim 1, wherein a Dual Fuel Generator Engine (DFGE) is additionally disposed in the engine room.

8. The arrangement structure of claim 7, wherein the DFGE is a dual fuel generator engine configured to use fuel oil and natural gas that is supplied from the first liquefied gas storage tank.

9. The arrangement structure of claim 6, further comprising:
a fuel preparation room in which an ammonia supply system that supplies ammonia gas from the second liquefied gas storage tank to the gas turbine is mounted; and
a cargo compressor room in which an LNG supply system that supplies boil off gas generated from the cargo tank or natural gas acquired by forced vaporization to the gas turbine is mounted.

10. The arrangement structure of claim 9, wherein the fuel preparation room is mounted on the second liquefied gas storage tank, and
wherein the cargo compressor room is mounted on a trunk deck in the cargo section.

11. The arrangement structure of claim 9, wherein both the fuel preparation room and the cargo compressor room are mounted on the first liquefied gas storage tank.

12. The arrangement structure of claim 11, wherein the fuel preparation room and the cargo compressor room are disposed separately on a portside and a starboard, respectively, or are disposed to be biased toward one of the portside and the starboard.

13. The arrangement structure of claim 7, wherein a dual fuel auxiliary boiler configured to produce steam required in the ship is additionally disposed in a stern section.

14. The arrangement structure of claim 13, wherein, in the engine room, the dual fuel auxiliary boiler is disposed on a 1st deck, the gas turbine is disposed on a 2nd deck, and the DFGE is disposed on a 3rd deck.

15. The arrangement structure of claim 13, wherein, in the engine room, the dual fuel auxiliary boiler is disposed on a starboard side, the gas turbine is disposed on a portside, and the DFGE is disposed on the starboard side.

16. The arrangement structure of claim 13, wherein, in the engine room, the dual fuel auxiliary boiler is disposed on a portside, the gas turbine is disposed on a starboard side, and the DFGE is disposed on the portside.

17. The arrangement structure of claim 13, wherein boil off gas (BOG) generated from the first liquefied gas storage tank is combusted through an idle mode of the gas turbine, a Gas Combustion Unit (GCU) mode of the dual fuel auxiliary boiler, or the DFGE.

18. The arrangement structure of claim 1, wherein an electrical switchboard room is vertically disposed between the engine room and the first liquefied gas storage tank.

19. The arrangement structure of claim 18, wherein a second cofferdam is mounted between the electrical switchboard room and the first liquefied gas storage tank.

20. The arrangement structure of claim 1, wherein the second liquefied gas storage tank is designed in a trapezoidal shape according to a hull form.

21. The arrangement structure of claim 1, further comprising:
a waste heat recovery system separately disposed adjacent to an engine casing covering the engine room and configured to convert waste heat of exhaust gas discharged from the gas turbine into electric power and to supply the electric power to the electric propulsion motor.

22. The arrangement structure of claim 21, wherein the waste heat recovery system is a supercritical carbon dioxide power generation system.

23. The arrangement structure of claim 22, wherein the supercritical carbon dioxide power generation system is disposed adjacent to a stern side of the engine casing, and is spaced apart from a sunken deck by pilotis at a predetermined height.

24. The arrangement structure of claim 23, wherein the supercritical carbon dioxide power generation system comprises:
a heater disposed inside the engine casing and configured to recover waste heat of exhaust gas discharged from the gas turbine to heat carbon dioxide;
a turbine configured to be rotated due to a supercritical state of the carbon dioxide heated by the heater, thereby generating electric power;
a compressor configured to compress the carbon dioxide;
a heat exchanger configured to exchange heat of carbon dioxide recovered from the turbine with heat of carbon dioxide supplied from the compressor to the heater;
a precooler configured to cool the carbon dioxide passing through the heat exchanger from the turbine and to supply the cooled carbon dioxide to the compressor; and
a preheater configured to heat carbon dioxide supplied from the compressor to the heater by heat exchange with exhaust gas that has passed through the heater, the carbon dioxide bypassing the heat exchanger.

25. A ship comprising the arrangement structure of any one of claim 1 to claim 24.
